(19) Europäisches Patentamt
European Patent Office
Office européen des brevets

(11) EP 0 777 723 B1

# (12) EUROPEAN PATENT SPECIFICATION

(45) Date of publication and mention of the grant of the patent:
**14.10.1998 Bulletin 1998/42**

(21) Application number: **95926945.7**

(22) Date of filing: **14.07.1995**

(51) Int Cl.[6]: **C11D 17/06**, C11D 3/00, C11D 3/37, B01D 19/04

(86) International application number:
**PCT/EP95/02832**

(87) International publication number:
**WO 96/06921 (07.03.1996 Gazette 1996/11)**

## (54) PROCESS FOR THE PREPARATION OF FOAM CONTROL GRANULE FOR PARTICULATE DETERGENT COMPOSITIONS

VERFAHREN ZUR HERSTELLUNG VON SCHAUMREGULIERENDEN KÖRNCHEN FÜR TEILCHENFÖRMIGE WASCHMITTELZUSAMMEN- SETZUNGEN

PROCEDE POUR LA PREPARATION DE GRANULE REGULATEUR DE MOUSSE DESTINE A DES COMPOSITIONS DETERGENTES PARTICULAIRES

(84) Designated Contracting States:
**DE ES FR GB IT**

(30) Priority: **26.08.1994 GB 9417371**

(43) Date of publication of application:
**11.06.1997 Bulletin 1997/24**

(73) Proprietors:
- **UNILEVER PLC**
  **London EC4P 4BQ (GB)**
  Designated Contracting States:
  **GB**
- **UNILEVER N.V.**
  **3013 AL Rotterdam (NL)**
  Designated Contracting States:
  **DE ES FR IT**

(72) Inventors:
- **VAN DER HOEVEN, Frans, Albertus**
  **NL-3069 DN Rotterdam (NL)**
- **HOUGHTON, Mark, Philip**
  **NL-2651 VG Berkel en Rodenrijs (NL)**

(74) Representative: **Fransella, Mary Evelyn et al**
**Unilever PLC**
**Patent Division**
**Colworth House**
**Sharnbrook**
**Bedford MK44 1LQ (GB)**

(56) References cited:

| | |
|---|---|
| EP-A- 0 210 114 | EP-A- 0 266 863 |
| EP-A- 0 342 985 | EP-A- 0 517 298 |
| EP-A- 0 636 685 | WO-A-91/12306 |
| WO-A-92/20770 | DE-A- 4 323 411 |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

TECHNICAL AREA

The present invention relates to a foam control granule containing silicone oil, for use in foam-controlled particulate detergent compositions.

BACKGROUND AND PRIOR ART

It is well known that detergent products containing anionic and/or nonionic surfactants which are particularly suitable for fabric washing generally have a tendency to produce excessive foam. This can be a problem particularly with drum-type washing machines, and it is accordingly usual to include a foam control agent in fabric washing detergent formulations to reduce or eliminate excessive foam production.

Silicone oils are very efficient controllers of foam, and are especially effective in combination with particulate antifoam promoters such as hydrophobic silica. Various silicone/hydrophobic silica compounds are commercially available.

The incorporation of granules containing silicone oil in detergent powders to provide in-wash foam control is well known. In such granules the silicone oil, plus hydrophobic silica if present, is generally sorbed into or onto a solid carrier material which may be inorganic or organic. Inorganic salts suggested in the art include sodium tripolyphosphate, sodium tripolyphosphate in admixture with sodium silicate or sodium sulphate, sodium perborate monohydrate, silica, and zeolite.

The choice of carrier material is important in preventing or minimising the tendency for the silicone oil to migrate during storage of the detergent powder from the carrier granules to other, neighbouring granules, while still providing rapid and efficient delivery of the foam control system in the wash. Migration of silicone oil away from the carrier and the consequent separation from the hydrophobic silica or other particulate antifoam promoter greatly reduces foam control efficiency; it can also have a detrimental effect on the detergent powder as a whole, causing loss of flow, caking, and poor delivery to the wash from the washing machine dispenser.

In some known granules, the carrier material, for example, a native or modified starch, consists of very small primary particles, for example, having a particle size of 1-10 micrometres, and the silicone oil, generally plus one or more binders, is used to build up larger particles by agglomeration. In foam control granules of this type, the primary particles of the carrier material are essentially non-porous and the silicone oil is adsorbed onto their surfaces, that is to say, the porosity of the final granules occupied by the silicone oil is inter-particle porosity.

A different approach is disclosed in EP 266 863B (Unilever), which discloses the use of an especially effective carrier material which is a sodium carbonate-based material having a relatively large intra-particle pore volume (0.1-2.0 $cm^3/g$) composed of relatively small pores (median pore diameter not exceeding 20 micrometres). Such a carrier material typically has a primary particle size greater than 50 micrometres, for example 100-300 micrometres, in contrast to the non-porous type of carrier previously described which typically has a primary particle size of the order of 1-10 micrometres.

In foam control granules of this type the silicone oil is predominantly within the intraparticle pore system of the carrier material, although a limited amount of agglomeration may also occur. The intra-particle pore structure allows entrapment of silicone-based foam control agents within the primary particles of the carrier material without the carrier itself becoming tacky, but still gives rapid and efficient delivery of the foam control agents in the wash at both high and low wash temperatures. The effectiveness of the foam control granule is thereby retained until it is needed at the point of use. The small pore size also means that the silicone oil is released in the wash in the form of especially small particles or droplets, which increases its foam control efficiency. An example of a carrier material satisfying this definition is light soda ash.

The use of this carrier system. utilising intra-particle porosity, has enabled highly efficient foam control granules to be prepared containing silicone oils of viscosities up to and including about 3500 mPa.s. Such oils may readily be incorporated in the carrier material by spraying on at a convenient processing temperature, for example, within the range of from 5 to 150°C, preferably from 15 to 90°C.

However, some modern highly efficient surfactant systems have such a high foaming tendency that larger than desirable amounts of such silicone oil are required to give adequate foam control in the wash. It is known that more efficient foam control is possible with silicone oils of higher viscosity, for example, 5000 mPa.s and above. However, higher viscosity silicone oils are notoriously unstable in detergent powders, and are difficult to incorporate in a porous granular carrier material. If a high viscosity oil is mixed with, for example, light soda ash, the oil coats the particles and causes granulation rather than entering the pore system.

The present invention is based on the discovery that high viscosity silicone oil may successfully be introduced into a carrier material having fine intraparticle pores, if its viscosity can temporarily be lowered, by application of shear.

Once within the carrier material the silicone oil (or mixture with a viscosity-modifying agent) reverts to a higher viscosity and remains stably within the granule without leaking out. The resulting granule is stable on storage and delivers an efficient foam control effect in the wash. Although especially advantageous for higher-viscosity silicone oils, the same technique may be used for lower-viscosity silicone oils to give a more stable foam control granule.

## DEFINITION OF THE INVENTION

The present invention accordingly provides a process for the preparation of a foam control granule for use in a particulate detergent composition, the granule comprising a particulate carrier material having intra-particle porosity, having absorbed therein a foam control composition comprising a silicone oil optionally in intimate admixture with a viscosity-modifying agent, the foam control composition having a sufficiently high viscosity at a temperature of from 5 to 50°C in the absence of shear to remain stably within the pores of the carrier material on storage,
the process comprising subjecting the foam control composition to high shear and spraying the foam control composition onto the porous particulate carrier material at a temperature within the range of from 5 to 150°C.

## DETAILED DESCRIPTION OF THE INVENTION

The foam control granules of the invention represent a means by which highly efficient high-viscosity silicone oils can be incorporated in detergent powders without the problems previously encountered.

The problem of forcing the silicone oil into the intra-particle pore structure of the carrier is solved by temporarily reducing its viscosity, by application of shear. The foam control composition, once introduced into the intra-particle pore system of the carrier material, remains there stably without migrating through the detergent powder, until released in the wash liquor by the dissolution or dispersion of the carrier material.

Prior to this discovery it has been necessary to rely on raising the temperature if the foam control composition has too high a viscosity for processing at ambient temperature. The invention means that preparation of the granule need not be carried out at elevated temperature. The desired reduction in viscosity is achieved by application of shear.

According to a first preferred embodiment of the invention, the silicone oil is shear-thinning. As described in more detail below, some silicone oils are intrinsically shear-thinning, and the foam control composition may in this case consist solely of the silicone oil, although the inclusion of other ingredients may be advantageous for other reasons. The presence of finely divided particles, for example, of hydrophobic silica, can also impart nominal shear-thinning properties to a silicone oil that is not itself intrinsically shear-thinning. Shear-thinning silicone oils are described in more detail below.

According to a second preferred embodiment of the invention, the foam control composition comprises a silicone oil in intimate admixture with a viscosity-modifying agent. The intimate mixture is preferably a substantially homogeneous emulsion or solution.

This second embodiment may be used in combination with the first, that is to say, the foam control composition may if desired comprise a shear-thinning silicone oil in combination with a viscosity-modifying agent. The temporary reduction in viscosity required for processing may then be achieved by the combination of the application of shear and the effect of the viscosity-modifying agent. The viscosity-modifying agent is preferably one that itself contributes to foam control.

The granules of the invention may easily be prepared using conventional batch or continuous mixing equipment.

Although especially advantageous in the context of high viscosity silicones, the present invention also gives granules of improved stability using lower viscosity silicone oils.

### The silicone oil

Silicone oils are liquid polydiorganosiloxanes. A suitable polydiorganosiloxane is a linear or partially branched polymer of the average formula I:

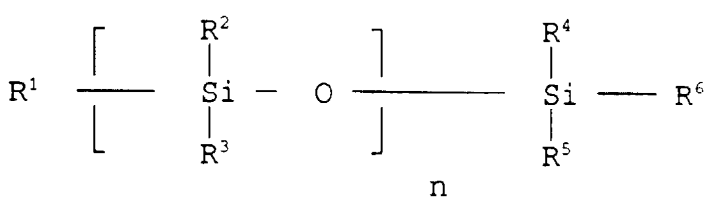
(I)

wherein each R independently can be an alkyl or aryl radical, for example, a methyl, ethyl, propyl, isobutyl or phenyl group, and may be interrupted or terminated by a heteroatom, eg in an - OH, - $NH_2$ or an - NHR group; or may represent a bond to further groups, for example, - O - Si - or - O - Si - $(CH_2)_m$ - Si - ($m$ = 1 or 2), to form another chain. The amount of branching preferably does not exceed about 5%, that is to say, not more than 5% of the repeat units within square brackets in formula I above should include bonds to further chains.

Silicone oils may have dynamic viscosities ranging, for example, from 3000 to 40 000 mPa.s. The present invention is especially concerned with silicone oils of higher viscosity, for example, above 5000 mPa.s. However, the invention is also applicable to lower-viscosity silicone oils, enabling more storage-stable foam control granules to be produced.

Essentially linear silicone oils are generally Newtonian in behaviour, that is to say, their viscosities do not vary significantly with applied shear. However, some silicone oils containing a greater degree of branching exhibit marked shear-thinning behaviour. The present invention is especially concerned with shear-thinning silicone oils, and more especially with those that at low shear (21 $s^{-1}$) have a viscosity of at least 5000 mPa.s. For the purposes of the present invention, viscosities are measured at 25°C and a shear rate of 21 $s^{-1}$ using Rheolab (Trade Mark) MC-1100 apparatus equipped with a MK90 cone and plate viscometer head.

As described in more detail below, the foam control efficiency of a silicone oil is significantly increased by the presence of suspended particles of a finely divided particulate antifoam promoter, for example, hydrophobised silica. The presence of such fine particulate material itself confers a certain degree of shear-thinning behaviour, derived from the physical volume of suspended particles, even when the silicone oil itself is not intrinsically shear-thinning. This property can be utilised to advantage in the present invention, but silicone oils exhibiting true intrinsic shear-thinning behaviour are of especial interest. Foam control granules containing shear-thinning silicone oils or silicone oil/silica compounds are described and claimed in our copending application of even date (Case C3606) claiming priority from British Patent Application No. 94 17355.6 filed on 26 August 1994.

Shear thinning behaviour may be described by the well-known Sisko equation:

$$\eta = \eta_{\infty} + K.\gamma^{p}$$

where $\eta$ is the liquid viscosity (in Pa.s) at a given shear rate $\gamma$ (in $s^{-1}$). As the shear rate increases the viscosity tends to its minimum value $\eta_{\infty}$ , the viscosity it would have in the absence of any structure which would give rise to a higher viscosity.

Examples of the application of this equation to some silicone oil/hydrophobic silica compounds and silicone oils are as follows ($\eta$ is at 21 $s^{-1}$ and 25°C) :

| | $\eta$ | $\eta_{\infty}$ | $K$ | $p$ |
|---|---|---|---|---|
| Compounds | | | | |
| Dow Corning DC 2-3510 | 6540 | 3031 | 8309 | -0.27 |
| Wacker S-131 | 9950 | 3591 | 7116 | -0.038 |
| Rhône-Poulenc 20 472 | 7330 | 809 | 7007 | -0.025 |
| Silicone oils | | | | |
| Branched | 18130 | | 3858 | -0.77 |
| Linear | 3502 | | 5136 | -0.002 |

The branched silicone oil and the Dow-Corning compound are intrinsically shear-thinning, while the Wacker and Rhône-Poulenc materials are nominally shear-thinning owing to their content of hydrophobic silica. The linear silicone oil is essentially Newtonian in behaviour.

The amount of silicone oil present in the granule of the invention may range, for example, from 3 to 25 wt%, preferably from 5 to 20 wt%.

<u>The fine particulate antifoam promoter</u> (optional)

As previously indicated, the foam control efficiency of a silicone oil is significantly increased by the presence of suspended particles of a finely divided particulate antifoam promoter, which may also have the additional advantage of imparting nominal shear-thinning behaviour to a silicone oil.

The preferred antifoam promoter is hydrophobised silica. The silica may be a fumed silica, a precipitated silica, or a silica made by the gel formation technique. The silica particles preferably have an average particle size $d_{3,2}$ (surface-area-weighted) of from 0.1 to 50 micrometres, preferably from 1 to 20 micrometres, and a surface area of at least 50 $m^2/g$, typically 100 $m^2/g$ or more. These silica particles may be rendered hydrophobic, for example, by treating them with dialkylsilyl groups and/or trialkylsilyl groups bonded directly onto the silica.

The amount of silica present in the silicone oil/silica mix is suitably within the range of from 1 to 30 wt%, more preferably from 2 to 15 wt%.

As already indicated, suitable silicone/silica compounds are commercially available, for example, from Dow Corning, Wacker-Chemie, and Rhône-Poulenc.

Examples include the following:

| Name | Viscosity 25°C/21$s^{-1}$ (mPa.s) | Manufacturer |
|---|---|---|
| DB-100 | 3 500 | Dow Corning |
| DC 2-3510 | 9 950 | Dow Corning |
| Q2-3302 | 15 000 | Dow Corning |
| S-131 | 9 900 | Wacker |
| 20 472 | 9 900 | Rhone-Poulenc |

Finely divided hydrophobic silica is also commercially available, an example being Sipernat (Trade Mark) D10 ex Degussa.

An alternative fine particulate antifoam promoter is an alkylphosphoric acid or salt which may suitably have the following structure II:

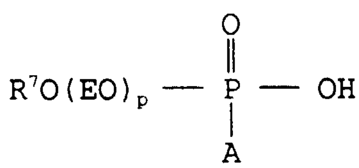
(II)

wherein A is -OH or $R^8O(EO)_q$, $R^7$ and $R^8$ are the same or different $C_{12-24}$ linear or branched alkyl or alkenyl groups, EO represents the ethylene oxide group $-CH_2CH_2O-$, and *p* and *q* are the same or different and are zero or an integer from 1 to 6.

The amount of finely divided antifoam promoter in the foam control granule of the invention may range, for example, from 0.5 to 5 wt%, preferably from 1 to 3 wt%.

<u>The viscosity-modifying agent</u>

According to the second embodiment of the invention, the foam control composition includes a viscosity-modifying agent.

The viscosity-modifying agent must be capable of forming a processable intimate mixture with the silicone oil at a convenient working temperature, for example, within the range of from 5 to 150°C, preferably 15 to 90°C, to give a low-viscosity intimate mixture (preferably emulsion or solution) that can be mixed into, preferably sprayed onto, a carrier material. Where the silicone oil is of high viscosity, the viscosity-modifying agent should be of lower viscosity, at a suitable working temperature, in order that a lower viscosity, homogeneous, sprayable mixture may be achieved.

Advantageously, the viscosity-modifying agent itself has foam control properties. One preferred class is constituted by hydrocarbon waxes, and an especially preferred material is petroleum jelly. This material, which may be regarded as a mixture of liquid and solid hydrocarbons, is a soft solid at ambient temperature and liquefies over the 35-40°C range. It can be mixed with higher-viscosity silicones at temperatures above about 60°C, mixing temperatures of about 80°C being preferred. A suitable commercially available material is Silkolene (Trade Mark) 910 ex Dalton.

Advantageously, the petroleum jelly may be premixed with an alkylphosphoric acid antifoam promoter, for example Phospholan Alf 5 (Trade Mark) ex Lankro, which is a $C_{12}$ alkyl phosphoric acid, ie a material of the formula II given earlier in which $R^7$ is $C_{12}$ alkyl, p is zero and A is a hydroxyl group. The fine particulate material assists in stabilising the intimate mixture as well as contributing to the foam control performance of the final granule. A suitable mixture may contain from 10 to 30 wt% alkylphosphoric acid and from 70 to 90 wt% petroleum jelly.

Another class of suitable viscosity-modifying agents is comprised by fatty acids, fatty acid soaps and mixtures thereof. A suitable mixture comprises 40 to 70 wt% fatty acid and 30 to 60 wt% fatty acid sodium soap, which need

not necessarily be of the same chain length; for example, 55-65 wt% predominantly $C_{12}$ fatty acids (Prifac (Trade Mark) 2920 ex Unichema), and 35-45 wt% sodium stearate.

The viscosity-modifying agent may suitably be present in a weight ratio to the silicone oil of from 0.3:1 to 3:1, preferably from 0.5:1 to 2:1.

The total amount of silicone oil, any viscosity-modifying agent and any finely divided particulate antifoam promoter present in the granule of the invention may suitably range from 10 to 40 wt%, more preferably from 15 to 35 wt%.

The porous particulate carrier material

In the granules of the invention, the carrier material has significant intra-particle porosity within which the foam control composition is absorbed.

Preferred carrier materials are inorganic salts, especially those having the preferred pore structure identified in EP 266 863B (Unilever) mentioned previously. Thus, the porous particulate carrier material advantageously has a pore volume of from 0.2 to 1.0 $cm^3$/g, more preferably from 0.25 to 1.0 $cm^3$/g, and a median pore diameter not greater than 20 micrometres.

The primary particle size of the carrier material is suitably at least 50 micrometres, and preferably at least 100 micrometres, suitably from 100 to 300 micrometres. The average particle size of the finished granules may be greater, for example, 500-1000 micrometres, since some agglomeration inevitably takes place during incorporation of the foam control composition.

Especially preferred carrier materials are based on sodium carbonate, for example, light soda ash. A suitable commercially available material is light grade sodium carbonate from Solvay.

The amount of carrier material in the granule of the invention may suitably range from 60 to 90 wt%, more preferably from 65 to 85 wt%.

The process

The process of the invention comprises mixing the foam control composition, in its temporarily low-viscosity form, into the porous particulate carrier material, preferably by spraying, at a convenient working temperature, for example, within the range of from 5 to 150°C, preferably from 15 to 90°C. The mixing (preferably spraying) step is preceded by a viscosity-reducing step which may comprise the application of shear alone (for a shear-thinning silicone oil), the intimate admixture with a viscosity-modifying agent, or both.

Where a viscosity-modifying agent is employed, the premixing step with the silicone oil is preferably carried out at a temperature just above the drop melting point of the mixture. For any given silicone oil and any given viscosity-modifying agent, the optimum temperature may readily be determined by routine experimentation. For example, in order to mix silicone oil of viscosity 5000 mPa.s with petroleum jelly/alkyl phosphate (3:1), a temperature above 60°C and preferably about 80°C has been found to be satisfactory.

It may be desirable to stabilise the intimate mixture either by high shear mixing immediately before spray-on, or (less preferably) by using two phase nozzles at 0.1-10 bar, preferably 1-4 bar, to prevent separation.

The presence of suspended particles of antifoam promoter, especially hydrophobic silica, may also help to stabilise the mixture.

The mixture is then mixed into, preferably sprayed onto, the porous particulate carrier material at a convenient working temperature, generally within the range of from 5 to 150°C, preferably from 15 to 90°C, and suitably within the 60 to 90°C range.

This may be carried out either as a batch process or as a continuous process. A batch process may be carried out, for example, in a drum mixer; suitable drum speeds for a 700 kg batch are 2-20 rpm, preferably 6-10 rpm. A continuous process may be carried out, for example, in a Lödige (Trade Mark) Recycler.

The product is a crisp granular material, having an average particle size of for example 500-1000 micrometres, suitable for addition by dry mixing to a particulate detergent composition.

Detergent compositions

The foam control granules of the present invention are intended for use in particulate detergent compositions. The granules may suitably be incorporated in amounts of from 0.25 to 10 wt%, preferably from 0.5 to 5 wt%, the optimum level depending on the amount and type of surfactant present in the detergent composition, and the amount and type of silicone oil in the foam control granule.

Detergent compositions of the invention will generally contain detergent-active compounds and detergency builders, and may optionally contain bleaching components and other active ingredients to enhance performance and properties.

Detergent-active compounds (surfactants) may be chosen from soap and non-soap anionic, cationic, nonionic, amphoteric and zwitterionic detergent-active compounds, and mixtures thereof. Many suitable detergent-active compounds are available and are fully described in the literature, for example, in "Surface-Active Agents and Detergents", Volumes I and II, by Schwartz, Perry and Berch. The preferred detergent-active compounds that can be used are soaps and synthetic non-soap anionic and nonionic compounds. The total amount of surfactant present is suitably within the range of from 5 to 40 wt%.

Anionic surfactants are well-known to those skilled in the art. Examples include alkylbenzene sulphonates, particularly linear alkylbenzene sulphonates having an alkyl chain length of $C_8$-$C_{15}$; primary and secondary alkylsulphates, particularly $C_8$-$C_{15}$ primary alkyl sulphates; alkyl ether sulphates; olefin sulphonates; alkyl xylene sulphonates; dialkyl sulphosuccinates; and fatty acid ester sulphonates. Sodium salts are generally preferred.

Nonionic surfactants that may be used include the primary and secondary alcohol ethoxylates, especially the $C_8$-$C_{20}$ aliphatic alcohols ethoxylated with an average of from 1 to 20 moles of ethylene oxide per mole of alcohol, and more especially the $C_{10}$-$C_{15}$ primary and secondary aliphatic alcohols ethoxylated with an average of from 1 to 10 moles of ethylene oxide per mole of alcohol. Non-ethoxylated nonionic surfactants include alkylpolyglycosides, glycerol monoethers, and polyhydroxyamides (glucamide).

Detergent compositions suitable for use in most automatic fabric washing machines generally contain anionic non-soap surfactant, or nonionic surfactant, or combinations of the two in any ratio, optionally together with soap.

The detergent compositions of the invention will generally also contain one or more detergency builders. The total amount of detergency builder in the compositions will suitably range from 5 to 80 wt%, preferably from 10 to 60 wt%.

Inorganic builders that may be present include sodium carbonate, if desired in combination with a crystallisation seed for calcium carbonate, as disclosed in GB 1 437 950 (Unilever); crystalline and amorphous aluminosilicates, for example, zeolites as disclosed in GB 1 473 201 (Henkel), amorphous aluminosilicates as disclosed in GB 1 473 202 (Henkel) and mixed crystalline/amorphous aluminosilicates as disclosed in GB 1 470 250 (Procter & Gamble); and layered silicates as disclosed in EP 164 514B (Hoechst). Inorganic phosphate builders, for example, sodium orthophosphate, pyrophosphate and tripolyphosphate, may also be present, but on environmental grounds those are no longer preferred.

Zeolite builders may suitably be present in amounts of from 5 to 60 wt%, preferably from 10 to 50 wt%. Amounts of from 10 to 45 wt% are being especially suitable for particulate (machine) fabric washing compositions. The zeolite used in most commercial particulate detergent compositions is zeolite A. Advantageously, however, maximum aluminium zeolite P (zeolite MAP) described and claimed in EP 384 070A (Unilever) may be used. Zeolite MAP is an alkali metal aluminosilicate of the P type having a silicon to aluminium ratio not exceeding 1.33, preferably not exceeding 1.15, and more preferably not exceeding 1.07.

Organic builders that may be present include polycarboxylate polymers such as polyacrylates, acrylic/maleic copolymers, and acrylic phosphinates; monomeric polycarboxylates such as citrates, gluconates, oxydisuccinates, glycerol mono-, di- and trisuccinates, carboxymethyloxysuccinates, carboxymethyloxymalonates, dipicolinates, hydroxyethyliminodiacetates, alkyl- and alkenylmalonates and succinates; and sulphonated fatty acid salts. This list is not intended to be exhaustive.

Especially preferred organic builders are citrates, suitably used in amounts of from 5 to 30 wt%, preferably from 10 to 25 wt%; and acrylic polymers, more especially acrylic/maleic copolymers, suitably used in amounts of from 0.5 to 15 wt%, preferably from 1 to 10 wt%. Builders, both inorganic and organic, are preferably present in alkali metal salt, especially sodium salt, form.

Detergent compositions according to the invention may also suitably contain a bleach system. Preferably this will include a peroxy bleach compound, for example, an inorganic persalt or an organic peroxyacid, capable of yielding hydrogen peroxide in aqueous solution. Preferred inorganic persalts are sodium perborate monohydrate and tetrahydrate, and sodium percarbonate. Especially preferred is sodium percarbonate having a protective coating against destabilisation by moisture. Sodium percarbonate having a protective coating comprising sodium metaborate and sodium silicate is disclosed in GB 2 123 044B (Kao). The peroxy bleach compound is suitably present in an amount of from 5 to 35 wt%, preferably from 10 to 25 wt%.

The peroxy bleach compound may be used in conjunction with a bleach activator (bleach precursor) to improve bleaching action at low wash temperatures. The bleach precursor is suitably present in an amount of from 1 to 8 wt%, preferably from 2 to 5 wt%. Preferred bleach precursors are peroxycarboxylic acid precursors, more especially peracetic acid precursors and peroxybenzoic acid precursors; and peroxycarbonic acid precursors. An especially preferred bleach precursor suitable for use in the present invention is N,N,N',N'-tetracetyl ethylenediamine (TAED).

A bleach stabiliser (heavy metal sequestrant) may also be present. Suitable bleach stabilisers include ethylenediamine tetraacetate (EDTA) and the polyphosphonates such as Dequest (Trade Mark), EDTMP.

The compositions of the invention may contain alkali metal, preferably sodium, carbonate, in order to increase detergency and ease processing. Sodium carbonate may suitably be present in amounts ranging from 1 to 60 wt%, preferably from 2 to 40 wt%.

Powder flow may be improved by the incorporation of a small amount of a powder structurant, for example, a fatty acid (or fatty acid soap), a sugar, an acrylate or acrylate/maleate polymer, or sodium silicate. One preferred powder structurant is fatty acid soap, suitably present in an amount of from 1 to 5 wt%.

Other materials that may be present in detergent compositions of the invention include sodium silicate; antiredeposition agents such as cellulosic polymers; fluorescers; inorganic salts such as sodium sulphate; proteolytic and lipolytic enzymes; dyes; coloured speckles; perfumes; and fabric softening compounds. This list is not intended to be exhaustive.

Preparation of the detergent compositions

Detergent compositions of the invention may be prepared by any suitable method. Particulate detergent compositions of lower bulk density, for example 400-500 g/litre, are suitably prepared by spray-drying a slurry of compatible heat-insensitive ingredients, and then spraying on or postdosing those ingredients unsuitable for processing via the slurry. The skilled detergent formulator will have no difficulty in deciding which ingredients should be included in the slurry and which should not. The foam control granules of the invention should be postdosed.

Preferred particulate detergent compositions of the invention having a bulk density of at least 500 g/l, preferably at least 650 g/litre, and more preferably at least 700 g/litre, may be prepared by post-tower densification of a spray-dried powder, or directly by mixing and granulation of raw materials, advantageously using a high-speed mixer/granulator. Such processes are disclosed, for example, in EP 340 013A, EP 367 339A, EP 390 251A and EP 420 317A (Unilever). As with a spray-dried powder, less robust or more heat-sensitive ingredients, including the foam control granules of the present invention, should be postdosed to the dense granular base powder.

Description of preferred embodiments

The invention will now be described in further detail, by way of example only, in the following Examples and with reference to the accompanying drawing. Parts and percentages are by weight unless otherwise stated.

Description of the drawing

The invention will now be described in further detail with reference to the accompanying drawing, which is a diagrammatic representation of a batch plant suitable for production of foam control granules of the invention.

The plant comprises a supply tank 1 for silicone oil (plus optional hydrophobic silica) and a supply tank 2 for a viscosity-modifying agent, each provided with thermostatic heaters 3, 4 and stirrers 5, 6; a mixing vessel 7 with stirrer 8 (turbine agitator) fed by supply tanks 1 and 2; a high shear mixer 9; a drum mixer 10 fed from the mixing vessel 7 via the high shear mixer 9, and also provided with an air inlet 11 and a solid feed port 12; and a hopper 13 for discharge of product from the drum mixer 10.

An example of a process is now described for the preparation of granules having the following composition:

| | Weight % |
|---|---|
| Light soda ash | 70.0 |
| Silicone oil (with silica) | 18.0 |
| Petroleum jelly | 9.6 |
| Alkylphosphoric acid | 2.4 |

The silicone oil is held in supply tank 1 at 80°C with stirring, while a viscosity-modifying agent, petroleum jelly/alkylphosphoric acid, is held in supply tank 2 at 80°C with stirring. The two materials are pumped simultaneously at 50-80°C and 1000 kg/h to the turbine agitator 7, 8 where they are intimately mixed at 80°C to give a homogeneous emulsion. The emulsion is passed in 214 kg batches, at 50-80°C and a total throughput rate of 1500 kg/h, through the high shear mixer 9 and then immediately sprayed into the drum mixer 10 which contains a suitable quantity (500 kg per batch) of light soda ash.

If desired, the two supply tanks 1, 2 could feed directly to the high shear mixer 9 so that the formation of the intimate mixture took place there.

The product is discharged into the hopper 13 then sieved and bagged, or fed directly to a production line for detergent powders.

Examples

The invention is further illustrated by the following non-limiting Examples, in which parts and percentages are by weight unless otherwise stated.

Examples 1 to 3, Comparative Examples A to C

These Examples demonstrate the effect of storage on the foam control performance of various granules. A granular detergent composition of high bulk density having the following composition was used:

| | |
|---|---|
| Coconut alcohol sulphate | 5.82 |
| Nonionic 7EO | 7.91 |
| Nonionic 3EO | 5.27 |
| Zeolite MAP | 36.65 |
| Sodium soap | 2.05 |
| Sodium carbonate | 1.16 |
| Sodium carboxymethylcellulose | 0.90 |
| Sodium percarbonate | 20.50 |
| TAED | 4.75 |
| Bleach catalyst | 1.60 |
| EDTMP | 0.37 |
| Enzymes | 1.42 |
| Perfume | 0.45 |
| Foam control granules (see below) | 3.00 |
| Water and salts | to 100.00 |

The foam control granules were incorporated by dry mixing for at least 30 minutes to simulate factory mixing conditions and to ensure that the silicone-containing granules were distributed throughout the powder.

Foam heights were measured using a Miele (Trade Mark) W765 automatic front-loading washing machine, using the 40°C main wash cycle, 15° (French) hard water, a clean fabric load (3 kg, cotton) and 120 g of detergent powder placed in a delivery device on top of the load. The machine was fitted with a lather height monitor by means of which the foam height at the end of the main wash, just before the first rinse, was determined. A score of 1.0 represents a full porthole of foam, and any score above 1.0 represents overfoaming and the danger of foam leaking out of the machine.

Granules were prepared to the following formulations:

| Example | 1, A | 2, B | 3, C |
|---|---|---|---|
| Light soda ash[1] | 70.0 | 78.0 | 83.0 |
| Silicone oil*: | | | |
| 3500 mPas[2] | 18.0 | - | - |
| 6540 mPas[3] | - | 10.0 | - |
| 15 000 mPas[4] | - | - | 5.0 |
| Petroleum jelly[5] | 9.6 | 9.6 | 9.6 |
| Alkylphosphate[6] | 2.4 | 2.4 | 2.4 |

*All silicone oils contained 5 wt% of added hydrophobic silica (Sipernat D10 ex Degussa).

[1] Sodium carbonate light grade ex Solvay

[2] DB 100 ex Dow Corning

[3] DC 2-3510 ex Dow Corning

[4] Q2-3302 ex Dow Corning

[5] Silkolene 910 ex Dalton

[6] Phospholan Alf-5 ex Lankro

The granules of Comparative Examples A to C were prepared by simple mixing of all ingredients without premixing of the silicone oil and petroleum jelly/alkylphosphoric acid. In terms of the process described above with reference to the accompanying drawing, the silicone oil and the petroleum jelly/alkylphosphoric acid were conveyed separately to

the drum mixer 5 and sprayed in through separate nozzles.

The granules of Examples 1 to 3, of identical chemical composition, were prepared by a process as described above with reference to the accompanying drawing. An intimate mixture (emulsion) of the silicone oil, alkylphosphoric acid and petroleum jelly was prepared, and stabilised by high shear mixing, before spraying onto the light soda ash in the drum mixer.

Foam control was tested by the method described above using fresh granules, and granules that had been stored (in the detergent powder) in closed 1 kg packs at 37°C and 70% relative humidity.

| Example | Fresh granule | After storage | |
|---|---|---|---|
| | | 4 weeks | 12 weeks |
| A | 0.7 | 1.0 | - |
| 1 | 0.75 | 0.75 | 0.90 |
| B | 0.3 | >1.0 | - |
| 2 | 0.65 | 0.70 | 0.85 |
| C | 0.1 | >1.0 | - |
| 3 | 0.50 | 0.60 | 0.75 |

These results clearly show the benefit of using a viscosity-modifying agent in accordance with the invention, for silicone oils of various viscosities.

Examples 4 and 5 , Comparative Examples D to F

The following Examples show the benefits of using shear-thinning silicone oil/silica compounds.

Granules were prepared to the following formulations:

| Example | D | E, 4 | F, 5 |
|---|---|---|---|
| Light soda ash[1] | 72.0 | 90.0 | 95.0 |
| Silicone oil*: | | | |
| 3500 mPas[2] | 18.0 | - | - |
| 6540 mPas[3] | - | 10.0 | - |
| 15 000 mPas[4] | - | - | 5.0 |

*All silicone oils contained 5 wt% of added hydrophobic silica (Sipernat D10 ex Degussa).

[1] Sodium carbonate light grade ex Solvay

[2] DB 100 ex Dow Corning, not shear thinning

[3] DC 2-3510 ex Dow Corning, shear thinning

[4] Q2-3302 ex Wacker-Chemie, shear thinning

The granule compositions were chosen to give approximately equal foam control from fresh granules, following a preliminary experiment in which the amounts of the different silicone oils needed to give equal foam heights were determined.

In the preparation of the granules of Examples 4 and 5, the silicone oils were subjected to high shear stirring immediately before mixing with the light soda ash. The granules of the Comparative Examples (D to F) were prepared by simple mixing.

Foam control was tested by the method described above using fresh granules, and granules that had been stored (in the detergent powder) in closed 1 kg packs at 37°C and 70% relative humidity.

| Example | Fresh granule | After storage | |
|---|---|---|---|
| | | 4 weeks | 12 weeks |
| D | 0.7 | 1.0 | - |
| 4 | 0.3 | 0.3 | 0.4 |

(continued)

| Example | Fresh granule | After storage | |
|---|---|---|---|
| | | 4 weeks | 12 weeks |
| E | 0.3 | >1.0 | - |
| 5 | 0.1 | 0.1 | 0.3 |
| F | 0.1 | >1.0 | _ |

It will be seen that the granules containing the shear-thinning high-viscosity silicone oils gave excellent foam control both in fresh powder and in stored powder. Granules of the same composition prepared by simple mixing had poor storage stability: the silicone oil had not penetrated into the pore system of the light soda ash and had merely coated the granules, and was free during storage to migrate over the detergent powder.

Example 6, Comparative Example G: Dispensing into the washing machine

Both fresh and stored powders containing foam control granules were subjected to a test to determine the extent to which they would dispense from the drawer of a washing machine. Storage of the powders was as in previous Examples.

The detergent powder formulation was that given in earlier Examples. The foam control granules had the following formulations:

| Example | 6 | G |
|---|---|---|
| Light soda ash | 90 | 90 |
| Silicone/silica compound: | | |
| [1]7330 mPas, Newtonian | - | 10 |
| [2]6540 mPas, shear-thinning | 10 | - |

[1]Rhône-Poulenc 20 471

[2]Dow Corning DC 2-3510

The granule of Example 6 was prepared by a process in which the silicone oil was subjected to high shear stirring before mixing with the soda ash. The granule of Comparative Example G was prepared by simple mixing.

The dispensing test was carried out using a test rig based on the main wash compartment of the dispenser drawer of the Philips (Trade Mark) AWB 126/7 washing machine. This drawer design provides an especially stringent test of dispensing characteristics especially when used under conditions of low temperature, low water pressure and low rate of water flow.

In the test, a 100 g dose of powder was placed in a heap at the front end of the main compartment of the drawer, and subjected to a water fill of 5 litres at 10°C and an inlet pressure of 50 kPa, flowing in over a period of 1 minute. After 1 minute the flow of water ceased, and the powder remaining was then collected and dried to constant weight. The dry weight of powder recovered from the dispenser drawer, in grams, represents the weight percentage of powder not dispensed into the machine (the residue). Every result is the average of two duplicate measurements.

The residues obtained were as follows:

| Example | Fresh powder | Stored powder (12 weeks) |
|---|---|---|
| 6 | 9 | 7 |
| G | 8 | 23 |

These results demonstrate the advantage of using a shear-thinning silicone oil compound that had penetrated into the pore system of the light soda ash carrier, and was not able to migrate thoughout the powder to give a detrimental effect on dispensing.

**Claims**

1. A process for the preparation of a foam control granule for use in a particulate detergent composition, the granule comprising a particulate carrier material having intra-particle porosity, having absorbed therein a foam control composition comprising a silicone oil optionally in intimate admixture with a viscosity-modifying agent, the foam control composition having a sufficiently high viscosity at a temperature of from 5 to 50°C in the absence of shear to remain stably within the pores of the carrier material on storage,
characterised in that the process comprises subjecting the foam control composition to high shear and spraying the foam control composition onto the porous particulate carrier material at a temperature within the range of from 5 to 150°C.

2. A process as claimed in claim 1, characterised in that the silicone oil has a viscosity at 25°C and a shear rate of 21 $s^{-1}$ of at least 5000 mPa.s.

3. A process as claimed in claim 1, characterised in that the foam control granule comprises from 3 to 25 wt% of silicone oil.

4. A process as claimed in claim 1, characterised in that the silicone oil is shear-thinning.

5. A process as claimed in claim 1, characterised in that the foam control composition comprises a silicone oil in intimate admixture with a viscosity-modifying agent in a weight ratio to the silicone oil of from 0.3:1 to 3:1.

6. A process as claimed in claim 5, wherein the viscosity modifying agent comprises petroleum jelly.

7. A process as claimed in claim 1, characterised in that the foam control composition further comprises a fine particulate antifoam promoter comprising hydrophobic silica, and/or an alkylphosphoric acid or salt thereof in an amount of from 0.5 to 5 wt% of the foam control granule.

8. A process as claimed in claim 1, characterised in that the porous particulate carrier material has a primary particle size of at least 50 micrometres, a pore volume of from 0.2 to 1.0 $cm^3/g$ and a median pore diameter not greater than 20 micrometres.

9. A process as claimed in claim 8, characterised in that the porous particulate carrier material comprises sodium carbonate.

10. A process as claimed in claim 1, characterised in that the spraying is carried out at a temperature within the range of from 15 to 90°C.

11. A particulate detergent composition comprising one or more detergent-active compounds, one or more detergency builders, optionally other detergent ingredients,
characterised in that it further comprises a foam controlling amount of foam control granules prepared by a process as claimed in any one of claims 1 to 10.

12. A particulate detergent composition as claimed in claim 11, which comprises:

   (a) from 5 to 40 wt% of one or more detergent-active compounds,

   (b) from 5 to 80 wt% of one or more detergency builders,

   (c) optionally other detergent ingredients to 100 wt%,

   characterised in that it further comprises:

   (d) from 0.25 to 10 wt% of foam control granules prepared by a process as claimed in any one of claims 1 to 10.

## Patentansprüche

1. Ein Verfahren für die Herstellung eines schaumregulierenden Körnchens für die Verwendung in einer teilchenförmigen Waschmittelzusammensetzung, wobei das Körnchen ein teilchenförmiges Trägermaterial mit Intrateilchen-Porosität umfaßt, das eine schaumregulierende Zusammensetzung darin absorbiert hat, enthaltend ein Siliconöl, gegebenenfalls in inniger Mischung mit einem Viskosität-modifizierenden Mittel, wobei die schaumregulierende Zusammensetzung eine ausreichend hohe Viskosität bei einer Temperatur von 5° bis 50°C in der Abwesenheit von Scherung hat, um stabil innerhalb der Poren des Trägermaterials bei der Lagerung zu bleiben, dadurch gekennzeichnet, daß das Verfahren das Unterwerfen der schaumregulierenden Zusammensetzung einer hohen Scherung und Sprühen der schaumregulierenden Zusammensetzung auf das poröse teilchenförmige Trägermaterial bei einer Temperatur innerhalb des Bereiches von 5° bis 150°C, umfaßt.

2. Ein Verfahren nach Anspruch 1, dadurch gekennzeichnet, daß das Siliconöl eine Viskosität bei 25°C und eine Schergeschwindigkeit von 21 $s^{-1}$ von zumindest 5000 mPa.s hat.

3. Ein Verfahren nach Anspruch 1, dadurch gekennzeichnet, daß das schaumregulierende Körnchen von 3 bis 25 Gewichtsprozent Siliconöl enthält.

4. Ein Verfahren nach Anspruch 1, dadurch gekennzeichnet, daß das Siliconöl scherentzähend ist.

5. Ein Verfahren nach Anspruch 1, dadurch gekennzeichnet, daß die schaumregulierende Zusammensetzung ein Siliconöl in inniger Mischung mit einem Viskosität-modifizierenden Mittel in einem Gewichtsverhältnis zu dem Siliconöl von 0,3 : 1 bis 3 : 1, enthält.

6. Ein Verfahren nach Anspruch 5, worin das Viskosität-modifizierende Mittel Petroleumgallerte enthält.

7. Ein Verfahren nach Anspruch 1, dadurch gekennzeichnet, daß die schaumregulierende Zusammensetzung ferner einen feinen teilchenförmigen Antischaum-Promotor enthält, umfassend hydrophobes Siliciumdioxid und/oder eine Alkylphosphorsäure oder ein Salz derselben in einer Menge im Bereich von 0,5 bis 5 Gewichtsprozent des schaumregulierenden Körnchens.

8. Ein Verfahren nach Anspruch 1, dadurch gekennzeichnet, daß das poröse teilchenförmige Trägermaterial eine Primärteilchen-Größe von zumindest 50 Mikrometer, ein Porenvolumen von 0,2 bis 1,0 $cm^3/g$ und einen mittleren Porendurchmesser von nicht größer als 20 Mikrometer, aufweist.

9. Ein Verfahren nach Anspruch 8, dadurch gekennzeichnet, daß das poröse teilchenförmige Trägermaterial Natriumcarbonat enthält.

10. Ein Verfahren nach Anspruch 1, dadurch gekennzeichnet, daß das Sprühen bei einer Temperatur innerhalb des Bereiches von 15° bis 90°C durchgeführt wird.

11. Eine teilchenförmige Waschmittelzusammensetzung, enthaltend eine oder mehrere waschmittelaktive Verbindungen, einen oder mehrere Waschkraft-Builder, gegebenenfalls andere Waschmittelbestandteile, dadurch gekennzeichnet, daß sie ferner eine schaumregulierende Menge von schaumregulierenden Körnchen enthält, hergestellt durch ein Verfahren, wie in irgendeinem der Ansprüche 1 bis 10 beansprucht.

12. Eine teilchenförmige Waschmittelzusammensetzung nach Anspruch 11, welche umfaßt:

    (a) Von 5 bis 40 Gewichtsprozent von einer oder mehreren waschmittelaktiven Verbindungen,
    (b) von 5 bis 80 Gewichtsprozent von einem oder mehreren Waschkraft-Buildern,
    (c) wahlweise andere Waschmittelbestandteile bis zu 100 Gewichtsprozent,

    dadurch gekennzeichnet, daß sie ferner

    (d) von 0,25 bis 10 Gewichtsprozent schaumregulierende Körnchen enthält, hergestellt durch ein Verfahren, wie in irgendeinem der Ansprüche 1 bis 10 beansprucht.

## Revendications

1. Un procédé pour la préparation d'un granulé régulateur de mousse destiné à être utilisé dans une composition détergente particulaire, le granulé comprenant une matière de support particulaire qui présente une porosité interparticulaire, ayant absorbée à l'intérieur de celle-ci une composition de régulation de la mousse comprenant une huile de silicone, en mélange ajouté intime éventuel avec un agent de modification de la viscosité, la composition de régulation de la mousse présentant une viscosité suffisamment élevée à une température comprise entre 5 et 50°C en l'absence de cisaillement, pour demeurer stable à l'intérieur des pores de la matière de support en cours de stockage, caractérisé en ce que le procédé comprend les étapes consistant à soumettre la composition de régulation de la mousse à un fort cisaillement et à pulvériser la composition de régulation de la mousse sur la matière de support particulaire poreuse à une température comprise dans la gamme allant de 5 à 150 ° C.

2. Un procédé selon la revendication 1, caractérisé en ce que l'huile de silicone présente une viscosité à une température de 25 ° C et à un taux de cisaillement de 21 $s^{-1}$ au moins égale à 5 000 Mpas.

3. Un procédé selon la revendication 1, caractérisé en ce que le granulé régulateur de mousse comprend 3 à 25 % en masse d'huile de silicone.

4. Un procédé selon la revendication 1, caractérisé en ce que l'huile de silicone a une action de dilution par cisaillement.

5. Un procédé selon la revendication 1, caractérisé en ce que la composition de régulation de la mousse comprend une huile de silicone en mélange ajouté intime avec un agent de modification de la viscosité selon un rapport de masse par rapport à l'huile de silicone compris entre 0,3:1 et 3:1.

6. Un procédé selon la revendication 5, dans lequel l'agent de modification de la viscosité comprend du pétrolatum.

7. Un procédé selon la revendication 1, caractérisé en ce que la composition de régulation de la mousse comprend en outre un activateur anti-mousse particulaire fin comprenant de la silice hydrophobe et/ou un acide alkylphosphorique ou un sel de celle-ci dans une proportion comprise entre 0,5 et 5 % en masse du granulé régulateur de mousse.

8. Un procédé selon la revendication 1, caractérisé en ce que la matière de support particulaire poreuse présente une taille de particules primaires au moins égale à 50 microns, un volume de pores compris entre 0,2 et 1,0 $cm^3$/g, et un diamètre de pores moyen qui n'excède pas 20 microns.

9. Un procédé selon la revendication 8, caractérisé en ce que la matière de support particulaire poreuse comprend du carbonate de sodium.

10. Un procédé selon la revendication 1, caractérisé en ce que la pulvérisation est réalisée à une température comprise dans la gamme allant de 15 à 90 ° C.

11. Une composition détergente particulaire comprenant un ou plusieurs composé(s) tensioactif(s), un ou plusieurs édificateur(s) de détergence, de façon optionnelle, d'autres ingrédients détergents, caractérisée en ce qu'elle comporte en outre une quantité de régulation de la mousse de granulés régulateurs de mousse préparés par un procédé selon l'une quelconque des revendications 1 à 10.

12. Une composition détergente particulaire selon la revendication 11, qui contient :

    (a) 5 à 40 % en masse d'un ou de plusieurs composé(s) tensioactif(s),
    (b) 5 à 80 % en masse d'un ou de plusieurs édificateur(s) de détergence,
    (c) éventuellement d'autres ingrédients détergents jusqu'à 100 % en masse,

    caractérisée en ce qu'elle contient en outre :

    (d) 0,25 à 10 % en masse de granulés régulateurs de mousse préparés par un procédé selon l'une quelconque des revendications 1 à 10.

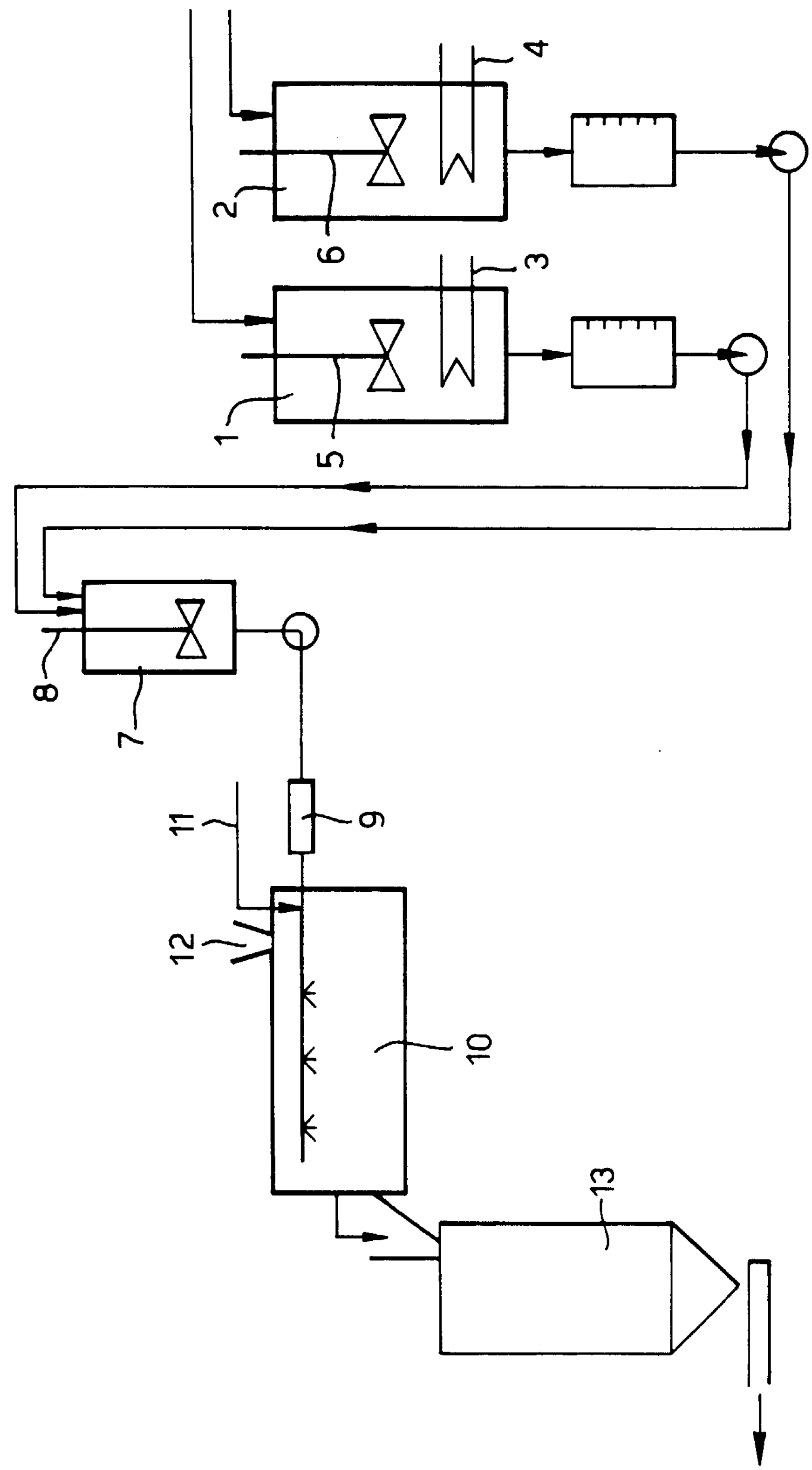
1
2
3
4
5
6
7
8
9
10
11
12
13